# EUROPÄISCHE PATENTSCHRIFT

(11) **EP 4 384 455 B1**
(45) Veröffentlichungstag und Bekanntmachung des Hinweises auf die Patenterteilung: **15.01.2025**
(21) Anmeldenummer: 22754281.8
(22) Anmeldetag: 08.08.2022
(51) Int. Cl.: B65D 81/05, B65D 81/38, B65D 65/46

(54) **WÄRMEDÄMMENDER ISOLIERBEHÄLTER**
THERMALLY INSULATING CONTAINER
RÉCIPIENT THERMOISOLANT

(30) Priorität: 12.08.2021 AT 506572021
(43) Veröffentlichungstag der Anmeldung: 19.06.2024
(73) Patentinhaber: Ecopax e.U., 8230 Hartberg (AT)
(72) Erfinder: LACKNER, Georg, 8230 Hartberg (AT)
(74) Vertreter: Babeluk Patentanwälte GmbH
(86) Internationale Anmeldenummer: PCT/AT2022/060278
(87) Internationale Veröffentlichungsnummer: WO 2023/015328

(56) Entgegenhaltungen:
- EP-A1- 3 381 830
- WO-A1-2018/089365
- WO-A2-2016/187435
- US-A1- 2011 042 449

## Beschreibung

Die Erfindung betrifft einen wärmedämmenden Isolierbehälter zum Transport und Aufbewahrung von Gegenständen, wobei der Isolierbehälter
eine gewichtskraftaufnehmende Außenhülle mit zumindest drei Seitenhüllenwänden und einer Bodenhüllenwand, und
eine thermisch isolierende Einlage aufweist, welche in der Außenhülle angeordnet ist, wobei die Einlage zumindest drei, vorzugsweise vier Seitenwände aufweist, die zumindest teilweise an den Seitenhüllenwänden der Außenhülle angeordnet sind, und
wobei die Einlage zumindest eine Bodenwand und eine Deckelwand aufweist und die Bodenwand an der Bodenhüllenwand der Außenhülle angeordnet ist, und die Deckelwand der Bodenwand gegenüberliegend angeordnet ist.

Die Erfindung betrifft auch ein Verfahren zur Herstellung einer thermisch isolierenden Einlage.

Isolierbehälter dieser Art werden beispielsweise zum Transport, Zwischenlagerung oder zur Abholung bereitgestellter Lieferungen von thermisch sensiblen Gütern, wie Medikamenten oder Lebensmitteln, sowohl im geschäftlichen Bereich, als auch im Haushalt verwendet. Dabei müssen sie eine ausreichende thermische Isolierung des Innenraumes oder der Innenräume des Isolierbehälters zu seiner Umgebung aufweisen, um die Güter darin ausreichend lange warm oder kühl zu halten. Zusätzlich können aktive oder passive Wärme- oder Kühlelemente im Isolierbehälter angeordnet werden, wobei der Isolierbehälter dafür eigene Fächer oder Räume im Innenraum aufweisen kann.

Oft werden solche Behälter dabei nur wenige Male oder gar nur einmal verwendet und danach entsorgt. Daher ist es sehr wichtig, dass sie möglichst umweltfreundlich, recycelbar und ressourcenschonend sind. Gleichzeitig ist auch wesentlich, dass sie einfach produziert werden können, damit die Kosten möglichst niedrig gehalten werden.

Die US 2018/0290813 A1 offenbart einen Isolierbehälter mit einer wärmedämmenden Einlage, welcher in eine die Gewichtskraft der Güter aufnehmende Außenhülle eingesteckt ist. Es wird eine Einlage aus mehreren gefüllten Wandelementen gebildet, welche miteinander verklebt sind. Dies bedingt eine ausreichende Wärmedämmung, ist jedoch recht komplex im Aufbau, da zuerst die Wandelemente hergestellt werden müssen und in einem weiteren Arbeitsschritt miteinander verbunden werden müssen. Dadurch sind die Kosten für die Herstellung hoch.

Die DE 10 2011 016 500 A1 offenbart eine alternative Ausführungsform eines Isolierbehälters, welche eine Außenhülle ohne Einlage aufweist, wobei die Außenhülle sowohl gewichtskraftaufnehmend als auch wärmedämmend ist. Dabei wird dessen Mantel mit einem Zellulosematerial gefüllt und anschließend abgesteppt, um die einzelnen Wände zu bilden. Dies ist trotz des einfacheren Aufbaus jedoch noch komplexer in der Herstellung, da dafür komplexe Zuschnitte der Mantelteile notwendig sind, die befüllt und anschließend abgesteppt werden. In einer Fertigungsstraße muss also ein sehr breites Ausgangsmaterial für die Mantelteile verwendet werden, welches anschließend zugeschnitten wird, um die einzelnen Laschen für die Bodenhüllenwände und Deckelhüllenwände zu bilden, welche mit den seitenhüllenwänden einstückig verbunden sind. Dazu steigt durch den komplexen Zuschnitt der Verschnittanteil, was wenig ressourcensparend ist. Darüber hinaus sind auch hier die Produktionskosten hoch.

Die EP 3 381 830 A1 offenbart eine Ausführung wie oben beschrieben, wobei Einlage aus mehreren gefüllten Säcken besteht, die miteinander vernäht sind. Dieser Aufbau ist recht arbeitsintensiv und kann zu Schwachstellen in der Isolation entlang der vernähten Kanten führen.

Aufgabe der Erfindung ist daher, einen Isolierbehälter und ein Verfahren zur Herstellung einer thermisch isolierenden Einlage bereitzustellen, der möglichst umweltschonend und kostengünstig in der Produktion ist.

Diese Aufgabe wird erfindungsgemäß dadurch erreicht, dass
die Seitenwände der Einlage einen gemeinsamen Schlauchbeutel aufweisen, dass die Seitenwände durch Steppnähte im Schlauchbeutel voneinander zumindest teilweise abgegrenzt sind, dass
der Schlauchbeutel mit einem Dämmmaterial gefüllt ist und
dass die Bodenwand und die Deckelwand vom Schlauchbeutel der Seitenwände getrennt sind.

Die Erfindung wird auch dadurch gelöst, dass ein Mantel des Schlauchbeutels bis auf eine Öffnung verschlossen wird, ein Dämmmaterial aufgelockert wird und in einen Mantel des Schlauchbeutels über die Öffnung eingebracht wird, und die Öffnung verschlossen wird, wobei der Schlauchbeutel nach der Befüllung in zumindest drei, vorzugsweise vier Seitenwände unterteilt wird, indem der Schlauchbeutel versteppt wird, sodass Steppnähte entstehen, welche die Seitenwände voneinander zumindest teilweise abgrenzen und wobei eine Bodenwand und eine Deckelwand der Einlage getrennt vom Schlauchbeutel hergestellt werden, oder nach dem Befüllen des Schlauchbeutels von diesem getrennt werden.

Durch den gemeinsamen Schlauchbeutel wird eine sehr effiziente Produktion und im Weiteren auch Zusammenbau ermöglicht, da solche Schlauchbeutel auf einer Schlauchbeutelmaschine einfach in großer Zahl sequenziell angefertigt werden können. Da der Schlauchbeutel nur die Seitenwände und nicht die Boden- und Deckelwände umfasst, reicht ein einfacher, linearer Schlauchbeutel aus, um die Seitenwände zu bilden. Ein nachträgliches Wegschneiden von überschüssigem Material an den Seiten zur Bildung von Bodenwand oder Deckelwand ist nicht notwendig, da diese Teile separat fertigbar sind. Damit wird Material gespart und die Fertigungsstraße kann schmal ausgeführt werden.

Dabei kann erfindungsgemäß auch vorgesehen sein, dass die einzelnen Verfahrensschritte, soweit möglich, in anderer Reihenfolge und/oder gleichzeitig durchgeführt werden. Beispielsweise kann das Dämmmaterial vor dem Verschließen des Mantels bis auf eine Öffnung durchgeführt werden.

Ein Schlauchbeutel ist dabei ein Beutel mit einem Mantel, meist im Wesentlich flach, wobei der Mantel eine Schlauchform, also eine kanalartige Form aufweist, wobei der Kanal an beiden Seiten nach der Füllung verschlossen wird. Dabei ist der Mantel vorzugsweise einstückig ausgeführt. Der Mantel ist im fertigen Zustand im Wesentlichen verschlossen, dass das Dämmmaterial im Mantel gehalten wird. Meist weist der Mantel zumindest zwei Mantelteile auf, welche miteinander verbunden sind oder er weist ein Mantelteil auf, das durch eine Längsverbindung, also eine Längsnaht zu einem Kanal mit zwei Öffnungen geformt wird, wobei eine durch zwei Seitenverbindungen, also Seitennähte, verschlossen wird. Vorzugsweise wird zuerst eine Seitennaht verschlossen, der Schlauchbeutel dann durch die letzte bleibende Öffnung befüllt und danach die zweite Seitennaht verschlossen. Insbesondere bei einer flachen Ausführung kann der Mantel zwei flache Mantelteile aufweisen, welche übereinander angeordnet werden. So kann bei der Fertigung zuerst ein Mantelsack gebildet werden, welcher befüllt wird und anschließend verschlossen wird.

Damit, dass die Bodenwand und Deckelwand von Schlauchbeutel der Seitenwände getrennt ist, ist gemeint, dass sowohl Bodenwand als auch Deckelwand nicht Teil des Schlauchbeutels der Seitenwände sind. Sie sind also nicht aus dem gleichen Mantel oder Mantelteil des Schlauchbeutels der Seitenwände. Vorzugsweise kann vorgesehen sein, dass Bodenwand und/oder Deckelwand nachträglich mit den Seitenwänden zumindest teilweise verbunden wird, beispielsweise über eine Klebeverbindung, über Verbindungselemente wie Laschen oder Seile oder über ein Zipp- oder Klettverschlusssystem.

Nach dem Absteppen kann der Schlauchbeutel derart gefaltet werden, dass die beiden äußersten Seitenwände aneinander geführt werden und sich so ein tunnelartiger Körper bildet, der einen Innenraum bis auf im Wesentlichen zwei Öffnungen umgrenzt. In diesen Innenraum können die Güter angeordnet werden.

Die Boden- und/oder Deckelwand kann ebenso Schlauchbeutel aufweisen, wobei diese Schlauchbeutel unabhängig vom Schlauchbeutel der Seitenwände sind. Damit können auch diese sehr leicht produziert werden. Beim Zusammenbau werden dann schnell und einfach vorzugsweise zuerst die gefalteten Seitenwände in die Außenhülle an dessen seitliche Wände angeordnet. Dann wird die Bodenwand an den Seitenwänden vorbei an den Boden der Außenhülle gedrückt und schlussendlich die Deckelwand oben daraufgesetzt. Dabei ist vorzugsweise die Bodenwand etwas größer oder gleich groß wie der Querschnitt des Kanals, den die Seitenwände miteinander bilden und/oder die Deckelwand etwas größer oder gleich groß wie der Querschnitt des Kanals. Dadurch wird erreicht, dass sich die Bodenwand durch ihre Rückstellkräfte an die Seitenwände anschmiegt und einen guten Schluss mit den Seitenwänden bildet, ohne Wärmebrücken zu bilden. So wird der Innenraum, den die Seitenwände mit Bodenwand und Deckelwand bilden, von allen Seiten thermisch geschützt.

Diese sehr einfache Herstellung zusammen mit einem sehr einfachen und schnellen Zusammenbau ist ressourcensparend und kosteneffizient zugleich. Durch eine Zellulosefaser haltige Füllung wird sichergestellt, dass einerseits ein kostengünstiges, nachhaltiges und biologisches Material verwendet wird, und andererseits, dass eine sehr gute Dämmleistung erbracht wird, um eine Temperaturdifferenz ausreichend stabil zu halten. Zellulosefasern können beispielsweise aus altem und/oder recyceltem Papier oder Karton hergestellt werden.

Die Absteppung der Seitenwände ist deswegen besonders vorteilhaft, da sie sehr einfach und schnell maschinell durchführbar ist. Mit Absteppung ist dabei eine Abgrenzung der Seitenwände gemeint, bei der die gegenüberliegenden Bereiche des Mantels miteinander kraftübertragend verbunden werden, sodass das Dämmmaterial am Übergang von einer Seitenwand zur nächsten behindert wird. Vorzugsweise liegen die gegenüberliegenden Bereiche des Mantels direkt aufeinander, womit der Schlauchbeutel im Bereich der Absteppung eine geringere Dichte aufweist. Die Absteppung kann durch eine Verschweißung, Prägung und/oder ein Zusammendrücken gebildet werden. Wird die Absteppung durch Nähte mittels eines Fadens erreicht, kann dabei ein abbaubares biologisches Material verwendet werden.

Damit kann erreicht werden, dass die gesamte Einlage biologisch abbaubar wird. Zusätzlich verhindern die Absteppungen eine ungleiche Verteilung des Dämmmaterials und ermöglichen das leichtere Falten des Schlauchbeutels.

In der Regel ist der Isolierbehälter prismatisch, noch häufiger rechteckig, weist also vier Seitenhüllenwände und vorzugsweise auch vier Seitenwände auf.

Die Bodenhüllenwand ist vorzugsweise unverlierbar mit den Seitenhüllenwänden verbunden. Besonders vorzugsweise wird die Bodenhüllenwand zumindest teilweise aus Laschen gebildet, welche mit den Seitenhüllenwänden verbunden sind.

Die Form, Menge und/oder Ausgestaltung der Seitenwände korrespondiert vorzugsweise mit jener der Seitenhüllenwände. Damit kann der Platz in der Außenhülle optimal genützt werden, und möglichst wenig Platz zwischen Außenhülle und Einlage zu verlieren. Die Form und/oder Ausgestaltung der Bodenwand korrespondiert vorzugsweise mit jener der Bodenhüllenwand und/oder die Form und/oder Ausgestaltung der Deckelwand korrespondiert vorzugsweise mit jener der Deckelhüllenwand.

Vorzugsweise trennt zumindest eine Steppnaht zumindest eine Seitenwand von einer anderen. Es können auch mehrere Steppnähte zwischen zwei benachbarten Seitenwänden angeordnet sein. Vorzugsweise erstreckt sich zumindest eine Steppnaht von einer Längsseite des Schlauchbeutels zu der gegenüberliegenden Längsseite.

Vorzugsweise liegen die Seitenwände an den Seitenhüllenwänden an. Vorzugsweise liegen die Bodenwand an der Bodenhüllenwand an. Es kann auch vorgesehen sein, dass diese Elemente miteinander betriebsmäßig trennbar oder untrennbar miteinander verbunden sind, beispielsweise durch Steck- oder Faltverbindungen, oder durch Verklebung oder Verschweißung.

Die Seitenwände sind in der Regel aneinander angeordnet und umgrenzen damit einen Innenraum, welcher meist zwei Öffnungen aufweist, die durch Deckelwand und Bodenwand verschließbar ist.

Mit gegenüberliegend zur Bodenwand ist dabei gemeint, dass die Deckelwand auf der gegenüberliegenden Seite der Seitenwände von der Bodenwand aus gesehen angeordnet ist. Damit sind mit Bodenwand und Deckelwand zwei gegenüberliegende Öffnungen an den Enden der Seitenwände verschließbar.

Vorzugsweise ist vorgesehen, dass die Steppnähte, die die Seitenwände voneinander trennen, als Faltlinien für den Schlauchbeutel ausgeführt sind. Dadurch kann der Schlauchbeutel an den Steppnähten direkt umgebogen werden. Somit stellen die Steppnähte die Kanten zwischen den Seitenwänden dar. Dies ermöglicht ein leichtes Falten direkt nach dem Absteppen und beschleunigt den Zusammenbau. Sie erfüllen also eine duale Funktion, indem sie das Umverteilen des Dämmmaterials verhindern und gleichzeitig beim Zusammenbau helfen.

Es ist vorteilhaft, wenn der Schlauchbeutel einen Mantel mit einem Mantelstück aufweist, das eine Längsnaht aufweist, die sich vorzugsweise entlang aller Seitenwände erstreckt und zwei Seitennähte aufweist, welche im Wesentlichen normal zur Längsnaht steht. Die Naht ist dabei vorzugsweise geschweißt, kann aber auch geklebt, gepresst und/oder genäht sein.

Weiters kann vorgesehen sein, dass Schlauchbeutel einen Mantel mit einem Innenmantel und einem Außenmantel aufweist, welche miteinander vernäht, verklebt und/oder verschweißt sind und/oder durch eine Faltverbindung verbunden sind und dass das Dämmmaterial zwischen dem Innenmantel und Außenmantel angeordnet ist.

Es kann vorgesehen sein, dass der Mantel zumindest teilweise aus Polyethylen, einem Gewebe und/oder einem Zellulosefasern haltigen Material gefertigt sind und vorzugsweise, dass der Mantel eine Papierschicht und eine Polyethylenschicht aufweist. Vorzugsweise ist die Polyethylenschicht an der Innenseite des Schlauchbeutels angeordnet. Dadurch können übereinander gebrachte Teile des Mantels oder verschiedener Mantelteile miteinander an der Polyethylenschicht verschweißt werden.

Vorzugsweise weist die Papierschicht eine Stärke zwischen 30 g/m² und 50 g/m², besonders vorzugsweise in etwa 40 g/m² und/oder die Polyethylenschicht eine Stärke zwischen 5 g/m² und 15 g/m², besonders vorzugsweise eine Stärke von etwa 10 g/m² auf.

Alternativ kann vorgesehen sein, dass der Mantel eine Schicht aus einem Gewebe und/oder einer Zellulosefaser, vorzugsweise Papier aufweist und besonders vorzugsweise ist vorgesehen, dass der Mantel im Wesentlichen aus einem Gewebe und/oder einer Zellulosefaser, vorzugsweise Papier ist. Damit wird erreicht, dass die Einlage ökologischer und biologisch abbaubar ist.

Wenn die Außenhülle aus Karton oder Papier gefertigt ist, so ist diese leicht aber dennoch formstabil und geeignet, größere Gewichtslasten aufzunehmen, welche durch Anordnung von Gütern in dem Isolierbehälter, oder welche von außen, beispielsweise von oben oder von der Seite, auf diesen wirken. Vorzugsweise ist die Außenhülle im Wesentlichen als Kartonkiste ausgeführt.

Besonders vorteilhaft ist, wenn der Schlauchbeutel weitere Steppnähte aufweist, welche in zumindest einer Seitenwand angeordnet sind und vorzugsweise diese weiteren Steppnähte zumindest eine Tasche zur Aufnahme von Dämmmaterial zumindest teilweise abgrenzt. Dadurch kann die Verteilung des Dämmmaterials in der Seitenwand genauer eingestellt werden und ein Absinken oder teilweises Verdichten verhindert werden. Gleichzeitig können so zumindest zwei unterschiedliche Bereiche innerhalb einer Seitenwand mit Dämmmaterial unterschiedlicher Eigenschaften gefüllt werden. Es kann auch vorgesehen sein, dass zumindest zwei Seitenwände mit Dämmmaterial unterschiedlicher Eigenschaften gefüllt sind. Dabei können diese Eigenschaften materialeigene sein, wie beispielsweise unterschiedliche Substanzmischungen oder unterschiedliche thermische Eigenschaften. Es können aber auch unterschiedliche Zustandseigenschaften sein, beispielsweise unterschiedliche Fülldichten.

In einer bevorzugten Ausführungsform ist vorgesehen, dass die Deckelwand an einer Deckelhüllenwand der Außenhülle angeordnet ist, welche vorzugsweise durch Laschen der Außenhülle gebildet wird. Damit kann der Isolierbehälter nach dem Befüllen verschlossen werden und gut transportiert werden, sowie leichter gestapelt werden. Dabei muss die Deckelwand nicht an der Deckelhüllenwand anliegen, es kann vorgesehen sein, dass die Deckelwand zumindest überwiegend zwischen die Seitenwände eingedrückt wird, um einen möglichst guten thermischen Schluss zu erreichen.

Besonders vorteilig ist, wenn die Einlage zumindest eine Zwischenwand aufweist, welche nicht Teil des Schlauchbeutels der Seitenwände ist und welche zwischen der Bodenwand und der Deckelwand angeordnet ist. Damit können unterschiedliche Klimazonen im Innenraum abgegrenzt werden, was beim Transport oder Lagerung von Gütern auf unterschiedlicher Temperatur oder Luftfeuchte vorteilhaft ist. Vorzugsweise trennt die Zwischenwand den Innenraum in zumindest zwei Raumteile.

Vorzugsweise ist vorgesehen, dass das Dämmmaterial Zellulosefasern umfasst. Alternativ kann auch vorgesehen sein, dass das Dämmmaterial aus einem anderen thermisch isolierenden Material, vorzugsweise Schafwolle, Baumwolle, oder Glaswolle ist.

Eine einfache, kosteneffiziente und ökologische Vorgehensweise ist, wenn das Dämmmaterial zerfasertes Papier und/oder zerfaserten Karton umfasst. Damit kann recyceltes Papier oder Karton, bzw. Altpapier oder Altkarton noch einmal verwendet werden. Vorzugsweise weisen die Partikel des zerfaserten Papiers und/ oder Kartons eine Größe von maximal 4,75 mm auf, wobei besonders vorzugsweise mindestens 50% größer als 1 mm sind.

Besonders vorteilhaft ist auch, wenn das Dämmmaterial im Schlauchbeutel in einer Dichte zwischen 20 kg/m³ und 60 kg/m³, vorzugsweise zwischen 30 kg/m³ und 50 kg/m³, und ganz besonders vorzugsweise in etwa 45 kg/m³ vorliegt. Damit wird einerseits wenig Dämmmaterial verwendet und andererseits eine ausreichend starke Dämmung erzielt. Ganz besonders vorteilhaft ist, wenn die erste Dichte des Dämmmaterials, also die Dichte kurz vor dem Einbringen in den Schlauchbeutel, in etwa 30 kg/m³ entspricht.

Vorzugsweise ist vorgesehen, dass das Dämmmaterial nach dem Auflockern eine erste Dichte aufweist und nach dem Einbringen in dem Schlauchbeutel eine zweite Dichte aufweist, welche höher ist als die erste Dichte. Dadurch kann die Dichte im fertig verschlossenen Schlauchbeutel genau eingestellt werden.

Es kann vorgesehen sein, dass eine definierte Menge an Dämmmaterial über eine Waage eingewogen wird, und diese Menge dann in den Schlauchbeutel eingebracht wird, wobei das Einwiegen vorzugsweise nach der Auflockerung erfolgt. Dies ist besonders vorteilhaft, da so der Füllgrad des Schlauchbeutels definiert werden kann und ein Platzen oder zu geringe Füllung vermieden wird.

Vorteilhaft ist, wenn das Dämmmaterial der Waage über ein Förderband zugeführt wird und/oder wenn das Dämmmaterial nach dem Einwiegen über eine öffenbare Klappe unter Nutzung der Schwerkraft aus der Waage herausbefördert wird. Durch das Förderband kann eine kontinuierliche oder diskontinuierliche Förderung des Dämmmaterials erreicht werden, wobei auch hier unter Nutzung der Schwerkraft die Förderung auf oder in die Waage erfolgen kann. Eine ungewollte Verdichtung des Dämmmaterials wird bei der Förderung durch das Förderband vermieden. Das Herausbefördern über eine Klappe ist eine besonders einfache und effiziente Möglichkeit des Weitertransports des Dämmmaterials. Insbesondere wenn das Dämmmaterial vom Förderband auf oder in die Waage unter Nutzung der Schwerkraft eingeführt wird und dieses nach der Verwiegung über die Klappe herausbefördert wird, kann eine besonders schnelle Arbeitsweise ermöglicht werden.

Weiters ist vorteilhaft, wenn das Dämmmaterial mit einer um eine Drehachse drehbaren und entlang der Drehachse verschiebbaren Förderschnecke in den Schlauchbeutel eingebracht wird, wobei das Dämmmaterial der Förderschnecke vorzugsweise über eine Waage, besonders vorzugsweise über eine Schneckenwaage zugeführt wird. Dies bedingt eine schnelle Einführung des Dämmmaterials. Dabei wird in der Regel die Förderschnecke gedreht und gleichzeitig zurückgezogen, wodurch die Förderschnecke Dämmmaterial nach vorn transportiert und sich ein Raum vor der Förderschnecke mit Dämmmaterial füllt. Danach wird die Förderschnecke nach vorne bewegt, womit das Dämmmaterial aus dem Raum in den Schlauchbeutel gedrückt wird.

Alternativ kann vorgesehen sein, dass das Dämmmaterial mit einem entlang einer Schiebeachse verschiebbaren Kolben in den Schlauchbeutel eingebracht wird, wobei das Dämmmaterial dem Kolben vorzugsweise über eine Waage, besonders vorzugsweise über eine Schneckenwaage zugeführt wird. Dieser Kolben, der in einem Zylinder geführt ist, kann durch Vorwärtsbewegung das Material im Zylinder in den Schlauchbeutel einschieben und durch Rückwärtsbewegung Raum zum Füllen des Zylinders freigeben.

Vorzugsweise wird das Dämmmaterial unter Nutzung der Schwerkraft in den Schlauchbeutel eingebracht. Ist ein Kolben wie oben beschrieben vorgesehen, so kann dies beispielsweise erreicht werden, indem der Kolben das Dämmmaterial entlang einer Abwärtsbewegung in Bezug auf den Erdboden in den Schlauchbeutel einbringt. Beispielsweise kann der Kolben dazu vertikal angeordnet sein.

Vorzugsweise ist der Kolben in einem Transportzylinder angeordnet, entlang dem das Dämmmaterial transportiert wird. Um überschüssige Luft abzutransportieren kann der Kolben Öffnungen zur Ableitung von Luft aus dem Transportzylinder aufweisen. Dem entsprechend kann vorgesehen sein, dass während des Einbringens durch den verschiebbaren Kolben Luft durch Öffnungen im Kolben vom Raum vor dem Kolben abgeleitet wird.

Besonders vorteilhaft ist, wenn das Dämmmaterial dem Kolben über einen Zuführkolben zugeführt wird, welcher vorzugsweise pneumatisch ist und/oder vorzugsweise in einem Winkel, besonders vorzugsweise einem Winkel zwischen 60° und 120°, ganz besonders vorzugsweise einem Winkel von etwa 90° zum Kolben steht. Der Winkel bezieht sich dabei auf den Winkel zwischen den Bewegungsachsen des Kolben und des Zuführkolbens, jeweils in Hauptstoßrichtung des Kolbens oder Zuführkolbens.

Zur Führung des Schlauchbeutels kann vorgesehen sein, dass der Schlauchbeutel nach dem Verschließen bis auf eine Öffnung zwischen zwei Förderbändern angeordnet und von diesen transportiert wird und dass die Förderbänder den Mantel im Bereich der Öffnung nach der Befüllung zusammenführen und die Öffnung vorzugsweise verschlossen wird, bevor der Schlauchbeutel die Förderbänder verlässt. So kann das Förderband gleichzeitig den Schlauchbeutel bewegen und beim Verschließen unterstützend einwirken. Dabei können die Förderbänder den Schlauchbeutel auch schon vor dem Verschließen transportieren.

In dieser Hinsicht besonders vorteilhaft ist, wenn die Förderflächen der zwei Förderbänder zueinander gerichtet werden und sich die Förderflächen vor der Befüllung des Schlauchbeutels in Richtung der Öffnung neigen und nach der Befüllung des Schlauchbeutels von der Öffnung wegzeigen. Damit kann der Öffnung beim Befüllen Platz gegeben werden, um sich möglichst zu entfalten das Dämmmaterial leicht durch diese treten zu lassen. Danach wird die Öffnung durch die Förderbänder zunehmend zusammengedrückt, sodass sie leicht verschlossen werden und verbleibende überschüssige Luft verdrängt werden kann.

Besonders vorteilhaft ist, wenn der Schlauchbeutel nach dem Verschließen der Öffnung durch einen Transportkanal mit zwei gegenüberliegenden Rollenbahnen geführt wird und dabei das Dämmmaterial im Schlauchbeutel durch Rollen der Rollenbahnen verteilt wird, wobei die Rollen der zwei Rollenbahnen vorzugsweise gegeneinander versetzt angeordnet sind. So kann eine besonders gleichmäßige Verteilung des Dämmmaterials erreicht werden, ohne eine zu starke Komprimierung zu bedingen.

Das Verschließen des Schlauchbeutels kann beispielsweise durch eine Verschweißung, Prägung und/oder ein Zusammendrücken bedingt werden.

Weiters umfasst die Erfindung auch ein Verfahren zur Herstellung eines Isolierbehälters, wobei eine gewichtskraftaufnehmende Außenhülle mit zumindest drei Seitenhüllenwänden und einer Bodenhüllenwand bereitgestellt wird, ein Schlauchbeutel von einer thermisch isolierenden Einlage nach dem beschriebenen erfindungsgemäßen Verfahren hergestellt wird, der Schlauchbeutel gefaltet wird, sodass die Seitenwände einen Kanal bilden, und wobei eine Bodenwand des thermisch isolierenden Einsatzes und der Schlauchbeutel in die Außenhülle eingebracht werden, sodass die Bodenwand an der Bodenhüllenwand und die Seitenwände an den Seitenhüllenwänden angeordnet sind, und wobei der Kanal mit einer Deckelwand des thermisch isolierenden Einsatzes geschlossen wird. Vorzugsweise werden die Seitennähte des Schlauchbeutels aneinander gebracht, womit sich ein Kanal oder ein Rohr bildet, der oder das zwei Öffnungen aufweist. Vorzugsweise wird zuerst der Schlauchbeutel und dann die Bodenwand in die Außenhülle eingebracht. Alternativ kann auch zuerst die Bodenwand und dann der Schlauchbeutel eingebracht werden.

In weiterer Folge wird die Erfindung anhand nicht einschränkenden Ausführungsformen in den Figuren erläutert. Es zeigen:
- Fig. 1: eine Draufsicht eines Schlauchbeutels eines erfindungsgemäßen Isolierbehälters in einer ersten Ausführungsform;
- Fig. 2: ein Ausschnitt einer Draufsicht des Isolierbehälters in einer teilweise zusammengebauten Form mit dem Schlauchbeutel aus Fig. 1.

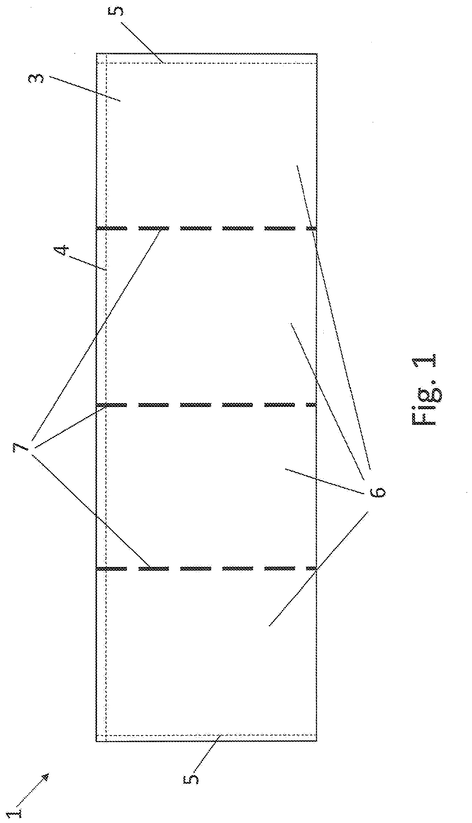

Figur 1 zeigt einen Schlauchbeutel 1, nachdem er gefüllt und verschlossen wurde. Er weist einen Mantel 3 auf, welcher aus einem einstückigen Folienstück zusammengefaltet ist. Das Folienstück weist dabei eine Papierschicht und eine an der Innenseite angeordnete Polyethylenschicht auf und es wurden zur Bildung eines Kanals oder einer Röhre dessen Längsseiten übereinandergelegt und mittels einer Längsnaht 4 verschweißt. Anschließend wurde eine der seitlichen Öffnungen durch eine Seitennaht 5 verschlossen, indem wieder die übereinander liegenden Teile des Folienstücks verschweißt wurden. Dadurch wird ein Sack gebildet, der nur eine Öffnung hat und über das Dämmmaterial als Füllstoff in den Mantel 3 eingebracht werden kann. Danach wird auf diese Öffnung durch eine weitere Seitennaht 5 verschlossen. Dadurch wird ein im Wesentlichen für das Dämmmaterial dichter Schlauchbeutel 1 gebildet.

Die Seitennähte 5 stehen einander gegenüber und stehen im Wesentlichen normal zur Längsnaht 4. Die Längsnaht 4 erstreckt sich über die gesamte Länge des Mantels 3 und die Seitennähte 5 erstrecken sich über die gesamte Breite des Mantels 3.

Der Schlauchbeutel 1 hat eine im Wesentlichen flache Form, wobei er durch die Füllung von seinen Rändern in Richtung seiner Mitte hin etwas dicker wird. Er hat also im Wesentlichen eine Polsterform.

Nach dem Verschluss des Schlauchbeutels 1 wird dieser in vier Seitenwände 6 unterteilt, indem drei Steppnähte durch Verschweißen der übereinander angeordneten Bereiche des Mantels 2 angeordnet werden. Diese bedingen, dass aus dem einen, mit Dämmmaterial gefüllten Kompartiment drei getrennte Räume werden, welche durch die Längsnaht 4, die Seitennähte 5 und die Steppnähte 7 abgegrenzt sind. Diese weisen für sich ebenso jeweils eine Polsterform auf.

Entlang der Steppnähte 7 ist der Schlauchbeutel 1 dünner als im Bereich zwischen den Steppnähten 7 oder zwischen Steppnaht 7 und Seitennaht 5.

Der Schlauchbeutel 1 weist keine Verbindung zu einer Bodenwand oder Deckelwand auf.

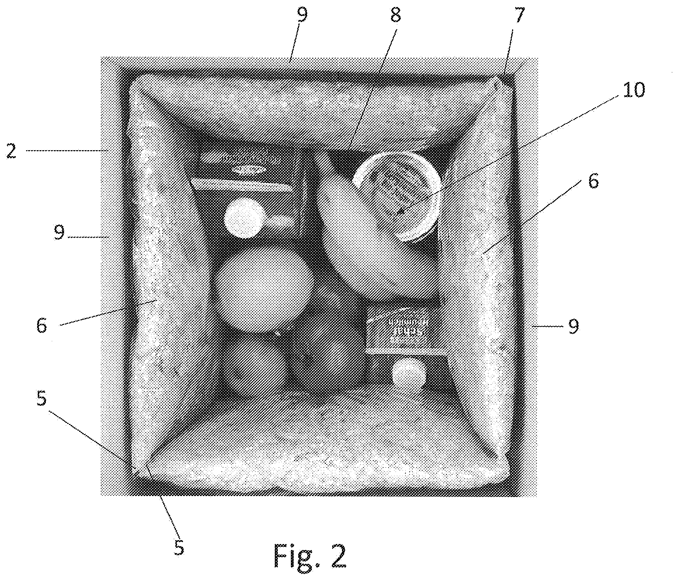

In Fig. 2 wird ein erfindungsgemäßer Isolationsbehälter während des Zusammenbaus in einem Detail gezeigt. Dabei ist eine Außenhülle 2 auf Karton vorgesehen, deren Bodenhüllenwand aus Laschen des Kartons gefaltet ist. Auf der Bodenhüllenwand ist eine Bodenwand 8 des Einsatzes angeordnet, welche ebenso als Schlauchbeutel ähnlich wie jener der Seitenwände ausgeführt ist, jedoch keine Unterteilungen aufweist. An den Seitenhüllenwänden 9 der Außenhülle 2 sind daran anliegend und im Wesentlichen parallel zu diesen stehend die Seitenwände 6 des Schlauchbeutels 1 der Figur 1 angeordnet. Dazu wurden die Enden des Schlauchbeutels 1, an denen die Seitennähte angeordnet sind, zueinander geführt, womit der Schlauchbeutel 1 einen Kanal 10 mit viereckigem Querschnitt bildet. Die Steppnähte 7 dienen dabei als Faltlinien, entlang derer sich der Schlauchbeutel 1 automatisch umbiegt, womit sich eine vordefinierte Form von selbst ergibt.

Die Größe und Außenkontur des Schlauchbeutels 1 ist auf die Größe und Innenkontur der Außenhülle 2 abgestimmt. Damit liegen die Seitenwände 6 an den Seitenhüllenwänden 9 an und es bleibt möglichst viel Stauraum im Inneren des Schlauchbeutels 1. Die Enden des Schlauchbeutels 1 sind dabei nicht miteinander verbunden, sondern werden durch die abgestimmten Größen von Einlage und Außenhülle 2 aneinandergehalten. So wird diese Position stabilisiert.

Wie in Fig. 2 dargestellt kann nach dem Einsatz der Bodenwand 8 Lebensmittel in den Raum zwischen den Seitenwänden 6 und auf die Bodenwand 8 angeordnet werden. Durch die Einlage isoliert diese thermisch nach außen hin. Danach kann eine nicht dargestellte Deckelwand darauf angeordnet werden und eventuell etwas zwischen die Wände hineingedrückt werden. Dadurch wird ein besonders dichter Schluss zu den Seitenwänden 6 gebildet und eine verbesserte Isolation erreicht.

## Patentansprüche

1. Wärmedämmender Isolierbehälter zum Transport und Aufbewahrung von Gegenständen, wobei der Isolierbehälter
eine gewichtskraftaufnehmende Außenhülle (2) mit zumindest drei Seitenhüllenwänden (9) und einer Bodenhüllenwand, und
eine thermisch isolierende Einlage aufweist, welche in der Außenhülle (2) angeordnet ist, wobei die Einlage (1) zumindest drei, vorzugsweise vier Seitenwände (6) aufweist, die zumindest teilweise an den Seitenhüllenwänden (9) der Außenhülle (2) angeordnet sind, und
wobei die Einlage zumindest eine Bodenwand (8) und eine Deckelwand aufweist und die Bodenwand (8) an der Bodenhüllenwand der Außenhülle (2) angeordnet ist, und die Deckelwand der Bodenwand (8) gegenüberliegend angeordnet ist, **dadurch gekennzeichnet, dass**
die Seitenwände (6) der Einlage einen gemeinsamen Schlauchbeutel (1) aufweisen, dass die Seitenwände (6) durch Steppnähte im Schlauchbeutel (1) voneinander zumindest teilweise abgegrenzt sind, dass
der Schlauchbeutel (1) mit einem Dämmmaterial gefüllt ist und dass
die Bodenwand (8) und die Deckelwand vom Schlauchbeutel (1) der Seitenwände (6) getrennt sind.

2. Isolierbehälter nach Anspruch 1, **dadurch gekennzeichnet, dass** die Steppnähte (7), die die Seitenwände (6) voneinander trennen, als Faltlinien für den Schlauchbeutel (1) ausgeführt sind.

3. Isolierbehälter nach Anspruch 1 oder 2, **dadurch gekennzeichnet, dass** der Schlauchbeutel (1) einen Mantel mit einem Mantelstück aufweist, das eine Längsnaht (4) aufweist, die sich vorzugsweise entlang aller Seitenwände (6) erstreckt und zwei Seitennähte (5) aufweist, welche im Wesentlichen normal zur Längsnaht (4) steht, wobei vorzugsweise vorgesehen ist, dass der Mantel zumindest teilweise aus Polyethylen, einem Gewebe und/oder einem Zellulosefasern haltigen Material gefertigt sind und besonders vorzugsweise, dass der Mantel eine Papierschicht und eine Polyethylenschicht aufweist.

4. Isolierbehälter nach einem der Ansprüche 1 bis 3, **dadurch gekennzeichnet, dass** die Deckelwand an einer Deckelhüllenwand der Außenhülle (2) angeordnet ist, welche vorzugsweise durch Laschen der Außenhülle (2) gebildet wird.

5. Isolierbehälter nach einem der Ansprüche 1 bis 4, **dadurch gekennzeichnet, dass** die Einlage zumindest eine Zwischenwand aufweist, welche nicht Teil des Schlauchbeutels (1) der Seitenwände ist und welches zwischen der Bodenwand (8) und der Deckelwand angeordnet ist.

6. Isolierbehälter nach einem der Ansprüche 1 bis 5, **dadurch gekennzeichnet, dass** das Dämmmaterial Zellulosefasern umfasst, wobei vorzugsweise vorgesehen ist, dass das Dämmmaterial zerfasertes Papier und/oder zerfaserten Karton umfasst.

7. Isolierbehälter nach einem der Ansprüche 1 bis 6, **dadurch gekennzeichnet, dass** das Dämmmaterial im Schlauchbeutel (1) in einer Dichte zwischen 20 kg/m³ und 60 kg/m³, vorzugsweise zwischen 30 kg/m³ und 50 kg/m³, und ganz besonders vorzugsweise in etwa 45 kg/m³ vorliegt.

8. Verfahren zur Herstellung einer thermisch isolierenden Einlage, wobei ein Mantel eines Schlauchbeutels (1) bis auf eine Öffnung verschlossen wird, ein Dämmmaterial aufgelockert wird und in einen Mantel des Schlauchbeutels (1) über die Öffnung eingebracht wird, und die Öffnung verschlossen wird, wobei der Schlauchbeutel (1) nach der Befüllung in zumindest drei, vorzugsweise vier Seitenwände (6) unterteilt wird, indem der Schlauchbeutel (1) versteppt wird, sodass Steppnähte (7) entstehen, welche die Seitenwände (6) voneinander zumindest teilweise abgrenzen und wobei eine Bodenwand (8) und eine Deckelwand der Einlage getrennt vom Schlauchbeutel (1) hergestellt werden, oder nach dem Befüllen des Schlauchbeutels (1) von diesem getrennt werden.

9. Verfahren nach Anspruch 8, **dadurch gekennzeichnet, dass** das Dämmmaterial nach dem Auflockern eine erste Dichte aufweist und nach dem Einbringen in dem Schlauchbeutel (1) eine zweite Dichte aufweist, welche höher ist als die erste Dichte.

10. Verfahren nach Anspruch 8 oder 9, **dadurch gekennzeichnet, dass** eine definierte Menge an Dämmmaterial über eine Waage eingewogen wird, und diese Menge dann in den Schlauchbeutel eingebracht wird, wobei das Einwiegen vorzugsweise nach der Auflockerung erfolgt, wobei vorzugsweise vorgesehen ist, dass das Dämmmaterial der Waage über ein Förderband zugeführt wird und/oder dass das Dämmmaterial nach dem Einwiegen über eine öffenbare Klappe unter Nutzung der Schwerkraft aus der Waage herausbefördert wird.

11. Verfahren nach einem der Ansprüche 8 bis 10, **dadurch gekennzeichnet, dass** das Dämmmaterial mit einer um eine Drehachse drehbaren und entlang der Drehachse verschiebbaren Förderschnecke in den Schlauchbeutel (1) eingebracht wird, wobei das Dämmmaterial der Förderschnecke vorzugsweise über eine Waage, besonders vorzugsweise über eine Schneckenwaage zugeführt wird.

12. Verfahren nach einem der Ansprüche 8 bis 11, **dadurch gekennzeichnet, dass** Dämmmaterial mit einem entlang einer Schiebeachse verschiebbaren Kolben in den Schlauchbeutel (1) eingebracht wird, wobei das Dämmmaterial dem Kolben vorzugsweise über eine Waage, besonders vorzugsweise über eine Schneckenwaage zugeführt wird, wobei vorzugsweise vorgesehen ist, dass das Dämmmaterial dem Kolben über einen Zuführkolben zugeführt wird, welcher vorzugsweise pneumatisch ist und/oder besonders vorzugsweise in einem Winkel, sehr besonders vorzugsweise einem Winkel zwischen 60° und 120°, ganz besonders vorzugsweise einem Winkel von etwa 90° zum Kolben steht.

13. Verfahren nach einem der Ansprüche 8 bis 12, **dadurch gekennzeichnet, dass** der Schlauchbeutel (1) nach dem Verschließen bis auf eine Öffnung zwischen zwei Förderbändern angeordnet und von diesen transportiert wird und dass die Förderbänder den Mantel im Bereich der Öffnung nach der Befüllung zusammenführen und die Öffnung vorzugsweise verschlossen wird, bevor der Schlauchbeutel (1) die Förderbänder verlässt.

14. Verfahren nach einer der Ansprüche 8 bis 13, **dadurch gekennzeichnet, dass** der Schlauchbeutel nach dem Verschließen der Öffnung durch einen Transportkanal mit zwei gegenüberliegenden Rollenbahnen geführt wird und dabei das Dämmmaterial im Schlauchbeutel durch Rollen der Rollenbahnen verteilt wird, wobei die Rollen der zwei Rollenbahnen vorzugsweise gegeneinander versetzt angeordnet sind.

15. Verfahren zur Herstellung eines Isolierbehälters, wobei eine gewichtskraftaufnehmende Außenhülle (2) mit zumindest drei Seitenhüllenwänden (9) und einer Bodenhüllenwand bereitgestellt wird, ein Schlauchbeutel (1) von einer thermisch isolierenden Einlage nach einem der Ansprüche 8 bis 14 hergestellt wird, der Schlauchbeutel (1) gefaltet wird, sodass die Seitenwände einen Kanal (10) bilden, und wobei eine Bodenwand (8) des thermisch isolierenden Einsatzes und der Schlauchbeutel (1) in die Außenhülle (2) eingebracht werden, sodass die Bodenwand (8) an der Bodenhüllenwand und die Seitenwände (6) an den Seitenhüllenwänden angeordnet sind, und wobei der Kanal (10) mit einer Deckelwand des thermisch isolierenden Einsatzes geschlossen wird, wobei vorzugsweise vorgesehen ist, dass ein Isolierbehälter nach einem der Ansprüche 1 bis 7 hergestellt wird.

## Claims

1. Thermally insulating container for the transportation and storage of articles, wherein the insulating container
has a weight-absorbing outer casing (2) having at least three side casing walls (9) and a bottom casing wall, and
a thermally insulating insert which is arranged in the outer casing (2), wherein the insert (1) has at least three, preferably four side walls (6) which are arranged at least partially on the side casing walls (9) of the outer casing (2), and
wherein the insert has at least one bottom wall (8) and one lid wall and the bottom wall (8) is arranged on the bottom casing wall of the outer casing (2), and the lid wall is arranged opposite the bottom wall (8),
**characterised in that**
the side walls (6) of the insert have a common tubular bag (1), **in that** the side walls (6) are at least partially delimited from each other by quilting seams in the tubular bag (1), **in that**
the tubular bag (1) is filled with an insulating material, and **in that**
the bottom wall (8) and the lid wall are separated from the tubular bag (1) of the side walls (6).

2. Insulating container according to claim 1, **characterised in that** the quilting seams (7) which separate the side walls (6) from one another are designed as fold lines for the tubular bag (1).

3. Insulating container according to claim 1 or 2, **characterised in that** the tubular bag (1) has a jacket with a jacket piece which has a longitudinal seam (4) which preferably extends along all the side walls (6) and has two side seams (5) which are substantially perpendicular to the longitudinal seam (4), wherein it is preferably provided that the jacket is made at least partly from polyethylene, a fabric and/or a material containing cellulose fibers, and particularly preferably that the jacket has a paper layer and a polyethylene layer.

4. Insulating container according to one of claims 1 to 3, **characterised in that** the lid wall is arranged on a lid casing wall of the outer casing (2), which is preferably formed by tabs of the outer casing (2).

5. Insulating container according to one of claims 1 to 4, **characterised in that** the insert has at least one intermediate wall which is not part of the tubular bag (1) of the side walls and which is arranged between the bottom wall (8) and the lid wall.

6. Insulating container according to one of claims 1 to 5, **characterised in that** the insulating material comprises cellulose fibers, wherein it is preferably provided that the insulating material comprises shredded paper and/or shredded cardboard.

7. Insulating container according to one of claims 1 to 6, **characterised in that** the insulating material in the tubular bag (1) is present in a density between 20 kg/m³ and 60 kg/m³, preferably between 30 kg/m³ and 50 kg/m³, and most preferably in about 45 kg/m³.

8. Method for producing a thermally insulating insert, wherein a jacket of a tubular bag (1) is closed except for an opening, an insulating material is loosened up and introduced into a jacket of the tubular bag (1) via the opening, and the opening is closed, wherein the tubular bag (1) is divided after filling into at least three, preferably four side walls (6) by quilting the tubular bag (1) so that quilting seams (7) are produced which at least partially delimit the side walls (6) from one another, and wherein a bottom wall (8) and a lid wall of the insert are produced separately from the tubular bag (1), or are separated from the tubular bag (1) after it has been filled.

9. Method according to claim 8, **characterised in that** the insulating material has a first density after loosening and has a second density which is higher than the first density after insertion into the tubular bag (1).

10. Method according to claim 8 or 9, **characterised in that** a defined quantity of insulating material is weighed in via a scale and this quantity is then introduced into the tubular bag, wherein the weighing-in is preferably carried out after loosening, wherein it is preferably provided that the insulating material is fed to the scale via a conveyor belt and/or that the insulating material is conveyed out of the scale after weighing-in via an openable flap using gravity.

11. Method according to one of claims 8 to 10, **characterised in that** the insulating material is introduced into the tubular bag (1) by means of a screw conveyor rotatable about an axis of rotation and displaceable along the axis of rotation, wherein the insulating material is fed to the screw conveyor preferably via a scale, particularly preferably via a screw scale.

12. Method according to one of claims 8 to 11, **characterised in that** insulating material is introduced into the tubular bag (1) by means of a piston which can be displaced along a sliding axis, wherein the insulating material is fed to the piston preferably via a scale, particularly preferably via a screw scale, wherein it is preferably provided that the insulating material is fed to the piston via a feed piston, which is preferably pneumatic and/or particularly preferably at an angle, very particularly preferably at an angle between 60° and 120°, very particularly preferably at an angle of about 90° to the piston.

13. Method according to one of claims 8 to 12, **characterised in that** the tubular bag (1) is arranged between two conveyor belts except for an opening after sealing and is transported by the latter, and **in that** the conveyor belts bring the jacket together in the region of the opening after filling and the opening is preferably closed before the tubular bag (1) leaves the conveyor belts.

14. Method according to one of claims 8 to 13, **characterised in that,** after the opening has been closed, the tubular bag is guided through a transport channel with two opposing roller conveyors and the insulating material is distributed in the tubular bag by rollers of the roller conveyors, wherein the rollers of the two roller conveyors are preferably arranged offset relative to one another.

15. Method for producing an insulating container, wherein a weight-force-absorbing outer casing (2) having at least three side casing walls (9) and a bottom casing wall is provided, a tubular bag (1) is produced from a thermally insulating insert according to one of claims 8 to 14, the tubular bag (1) is folded so that the side walls form a channel (10), and wherein a bottom wall (8) of the thermally insulating insert and the tubular bag (1) are introduced into the outer casing (2) so that the bottom wall (8) is arranged on the bottom casing wall and the side walls (6) are arranged on the side casing walls, and wherein the channel (10) is closed with a lid wall of the thermally insulating insert, wherein it is preferably provided that an insulating container according to one of claims 1 to 7 is produced.

## Revendications

1. Récipient thermo-isolant pour le transport et la conservation de produits, ce récipient isolant ayant :
- une enveloppe extérieure (2) recevant le poids avec au moins trois parois-enveloppes latérales (9) et une paroi-enveloppe de fond, et
- un insert thermo-isolant dans l'enveloppe extérieure (2), l'insert (1) ayant au moins trois et de préférence quatre parois latérales (6) qui sont disposées au moins en partie contre les parois-enveloppes latérales (9) de l'enveloppe extérieure (2), et
- l'insert ayant au moins une paroi de fond (8) et une paroi de couvercle, la paroi de fond (8) étant disposée sur la paroi enveloppe de fond de l'enveloppe extérieure (2) et la paroi de couvercle sur le côté opposé à la paroi de fond (8),
récipient **caractérisé en ce que**
- les parois latérales (6) de l'insert ayant un sac tubulaire (1) commun, les parois latérales (6) étant délimitées au moins en partie les unes des autres par des coutures piquées dans le sac tubulaire (1),
- le sac tubulaire (1) étant rempli d'une matière isolante, et
- la paroi de fond (8) et la paroi de couvercle étant séparées des parois latérales (6) par le sac tubulaire (1).

2. Récipient isolant selon la revendication 1,
**caractérisé en ce que**
les coutures piquées (7) séparant l'une de l'autre les parois latérales (6) étant réalisées comme lignes de pliage du sac tubulaire (1).

3. Récipient isolant selon la revendication 1 ou 2,
**caractérisé en ce que**
le sac tubulaire (1) ayant une enveloppe avec une pièce-enveloppe munie d'une couture longitudinale (4) s'étendant, de préférence, le long de toutes les parois latérales (6) et deux coutures latérales (5) qui sont pratiquement perpendiculaires à la couture longitudinale (4), et il est prévu, de préférence que, l'enveloppe est réalisée au moins en partie en polyéthylène, en un tissu et/ou une matière contenant des fibres de cellulose et, d'une manière particulièrement préférentielle, l'enveloppe a une couche de papier et une couche de polyéthylène.

4. Récipient isolant selon l'une des revendications 1 à 3,
**caractérisé en ce que**
la paroi de couvercle est prévue sur une paroi-enveloppe de couvercle de l'enveloppe extérieure (2) formée, de préférence, par des pattes de l'enveloppe extérieure (2).

5. Récipient isolant selon l'une des revendications 1 à 4,
**caractérisé en ce que**
l'insert a au moins une paroi intermédiaire qui ne fait pas partie du sac tubulaire (1) des parois latérales et qui est disposé entre la paroi de fond (8) et la paroi de couvercle.

6. Récipient isolant selon l'une des revendications 1 à 5,
**caractérisé en ce que**
la matière isolante comprend des fibres de cellulose et de préférence, la matière isolante comprend du papier défibré et/ou du carton défibré.

7. Récipient isolant selon l'une des revendications 1 à 6,
**caractérisé en ce que**
la matière isolante dans le sac tubulaire (1) a une densité comprise entre 20 kg/m³ et 60 kg/m³, et de préférence entre 30 kg/m³ et 50 kg/m³ et d'une manière particulièrement préférentielle, de l'ordre de 45 kg/m³.

8. Procédé de fabrication d'un insert thermo-isolant, selon lequel on ferme une enveloppe d'un sac tubulaire (1) en laissant une ouverture, on ameublit la matière isolante et on l'introduit dans une enveloppe du sac tubulaire (1) par l'ouverture et on ferme cette ouverture,
- on subdivise le sac tubulaire (1) après le remplissage en au moins trois et de préférence quatre parois latérales (6) en réalisant une couture piquée du sac tubulaire (1) de façon à obtenir des coutures piquées (7) qui délimitent au moins partiellement les parois latérales (6) les unes des autres, et
- on réalise séparément du sac tubulaire (1), une paroi de fond (8) et une paroi de couvercle de l'insert ou on les sépare de celui-ci, après le remplissage du sac tubulaire (1) on les sépare de celui-ci.

9. Récipient isolant selon la revendication 8,
**caractérisé en ce que**
après son ameublissement, la matière isolante a une première densité et après son introduction dans le sac tubulaire (1) elle a une seconde densité supérieure à la première densité.

10. Récipient isolant selon la revendication 8 ou 9,
**caractérisé en ce que**
on pèse une quantité définie de matière isolante sur une balance et on introduit cette quantité dans le sac tubulaire, la pesée se faisant de préférence après l'ameublissement et il est prévu, de préférence, de fournir la matière isolante à la balance avec une bande transporteuse et/ou après sa pesée, on transfère par le poids la matière isolante à partir de la balance par une trappe.

11. Récipient isolant selon l'une des revendications 8 à 10,
**caractérisé en ce que**
on introduit la matière isolante dans le sac tubulaire (1) avec une vis transporteuse, tournant autour d'un axe de rotation et coulissant le long de l'axe de rotation, la matière isolante étant fournie à la vis transporteuse, de préférence par l'intermédiaire d'une balance et d'une manière particulièrement préférentielle, par une balance à vis.

12. Procédé selon l'une des revendications 8 à 11,
**caractérisé en ce que**
on introduit la matière isolante dans le sac tubulaire (1) avec un piston coulissant selon un axe de coulissement,
- la matière isolante étant fournie par le piston, de préférence par une balance et d'une manière particulièrement préférentielle, par une balance à vis,
- il est prévu, de manière préférentielle, de fournir la matière isolante au piston par un piston d'alimentation, et qui, de préférence, est pneumatique et/ou d'une manière particulièrement préférentielle, fait un angle par rapport au piston et d'une manière très préférentielle, un angle compris entre 60° et 120°, et d'une manière extrêmement préférentielle, de préférence un angle d'environ 90°.

13. Procédé selon l'une des revendications 8 à 12,
**caractérisé en ce que**
après sa fermeture laissant une ouverture, le sac tubulaire (1) est mis entre deux bandes transporteuses pour être transporté par celles-ci, et après le remplissage, les bandes transporteuses se rejoignent dans la zone de l'ouverture et ferment, de préférence, l'ouverture avant que le sac tubulaire (1) ne quitte les bandes transporteuses.

14. Procédé selon l'une des revendications 8 à 13,
**caractérisé en ce que**
le sac tubulaire après la fermeture de l'ouverture passe par un canal de transport avec deux chemins à rouleaux, opposés et ainsi la matière isolante du sac tubulaire est répartie par les rouleaux des chemins à rouleaux, les rouleaux des deux chemins à rouleaux étant, de préférence, décalés les uns par rapport aux autres.

15. Procédé de fabrication d'un récipient isolant,
selon lequel
on réalise une enveloppe extérieure (2) recevant le poids de la charge ayant au moins trois parois d'enveloppe latérale (9) et une paroi d'enveloppe de fond, pour un sac tubulaire (1) muni d'un insert thermo-isolant selon l'une des revendications 8 à 14, le sac tubulaire (1) étant plié de façon que les parois latérales forment un canal (10), et
on introduit une paroi de fond (8) de l'insert thermo-isolant et du sac tubulaire (1) dans l'enveloppe extérieure (2) de façon que la paroi de fond (8) soit disposée sur la paroi-enveloppe de fond et que les parois latérales (6) soient prévues sur les parois latérales enveloppe, et
- on ferme le canal (10) avec la paroi de couvercle de l'insert thermo-isolant, en réalisant un récipient isolant selon l'une des revendications 1 à 7.
